# EUROPEAN PATENT SPECIFICATION

(11) **EP 1 821 455 B1**
(45) Date of publication and mention of the grant of the patent: **04.09.2013**
(21) Application number: 06705432.0
(22) Date of filing: 05.01.2006
(51) Int. Cl.: H04L 12/801

(54) **A METHOD FOR FORWARDING THE TRAFFIC FLOW IN THE BEARER NETWORK**
VERFAHREN ZUR WEITERGABE DES VERKEHRSFLUSSES IN EINEM BEARER-NETZ
PROCEDE DE RETRANSMISSION DU FLUX DE TRAFIC DANS UN RESEAU SUPPORT

(30) Priority: 05.01.2005 CN 200510000236
(43) Date of publication of application: 22.08.2007
(73) Proprietor: Huawei Technologies Co., Ltd., Longgang District, Shenzhen Guangdong 518129 (CN)
(72) Inventor: LV, Zhenzhu, Shenzhen, Guangdong 518129 (CN); XU, Bo, Shenzhen 518129 (CN); CHEN, Yuepeng, Shenzhen, Guangdong 518129 (CN)
(74) Representative: Körber, Martin Hans
(86) International application number: PCT/CN2006/000004
(87) International publication number: WO 2006/072214

(56) References cited:
- WO-A-01/50790
- WO-A-03/098958
- WO-A1-01/50790
- WO-A1-03/098958
- US-A1- 2004 215 817
- US-A1- 2004 215 817
- "Access and Terminals (AT); Digital Broadband Cable Access to the Public Telecommunications Network; IP Multimedia Time Critical Services; Part 5: Dynamic Quality of Service for the Provision of Real Time Services over Cable Television Networks using Cable Modems; ETSI TS 101 909-5" ETSI STANDARDS, EUROPEAN TELECOMMUNICATIONS STANDARDS INSTITUTE, SOPHIA-ANTIPO, FR, vol. AT-Digital, no. V111, August 2001 (2001-08), XP014016109 ISSN: 0000-0001

## Description

### Field of the Invention

The present invention relates to technologies for a Differentiated Service (Diff-Serv) model with a separate bearer layer, and particularly, to a technology for forwarding traffic in a bearer network.

### Background of the Invention

Along with the development of the Internet, various techniques for assuring Quality of Service (QoS) are proposed. Therefore, the Internet Engineering Task Force (IETF) put forward many service models and mechanisms to meet demands of QoS. At present, what is recognized in the field is to adopt an Integrated Service (Int-Serv) model at the access to and the border of a network and adopt a Differentiated Service (Diff-Serv) model at the core of the network. The Diff-Serv model guarantees the QoS only by setting priorities. Though with high line utilization efficiency, it is hard to predict specific effects of the Diff-Serv model. In order to improve QoS technologies, a separate bearer control layer and a special Diff-Serv QoS signalling mechanism are set up for the Diff-Serv model of a backbone network. The Diff-Serv model is called a Diff-Serv model having a separate bearer control layer.

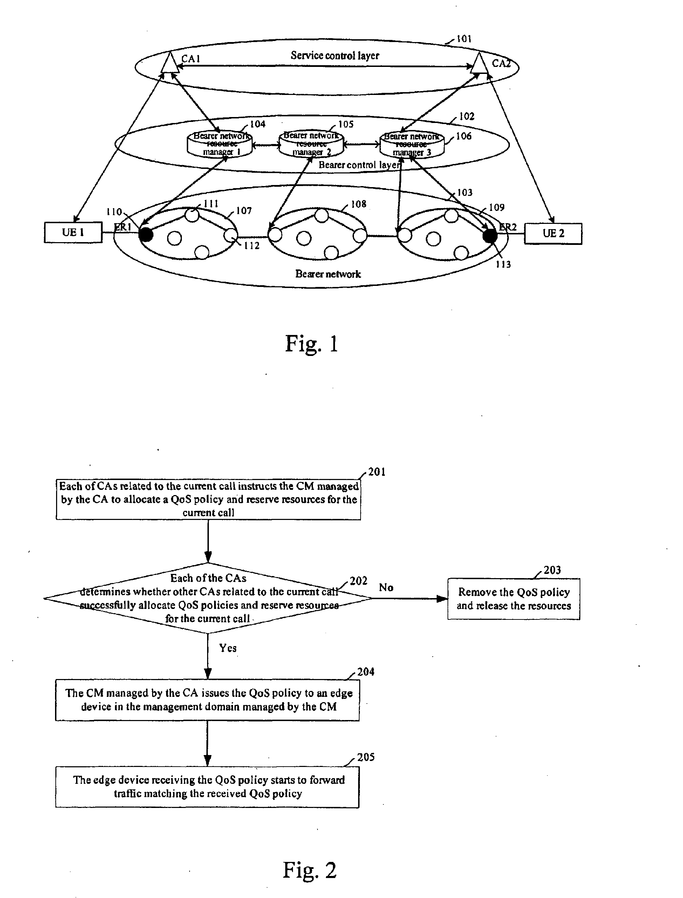

Fig.1 shows a Diff-Serv model with a separate bearer control layer. As shown in Fig.1, in the Diff-Serv model, bearer control layer 102 is located between bearer network. 103 and service control layer 101. The Call Agent (CA) in service control layer 101 is a service server such as a soft-switch, a Video on Demand (VOD) control server, and a Gate Keeper (GK). The CA receives a call request from User Equipment (UE) and implements the request and switch of the call as an agent of the UE. Only two CAs are shown in Fig.1, but a call may relate to one or more CAs. In bearer control layer 102, a bearer network resource manager acquires the topology structure and path resource information of core nodes and Label Switched Paths (LSPs) in the bearer network by learning dynamically or configuring statically. The bearer network resource manager calculates the path resource information and reserves path resources when receiving a resource application from the CA. Although only three bearer network resource managers, e.g., bearer network resource manager 1 (104), bearer network resource manager 2 (105) and bearer network resource manager 3 (106), are shown in Fig.1, the number of the bearer network resource managers is not limited. The service bandwidth application, the service bandwidth application response, and information of a path allocated by each bearer network resource manager for the service bandwidth application are delivered between bearer network resource managers through signallings. In bearer network 103, each bearer network resource manager manages a specific bearer network domain, which is called a management domain of the bearer network resource manager. In Fig.1, the management domain includes management domain 107 of bearer network resource manager 1, management domain 108 of bearer network resource manager 2, management domain 109 of bearer network resource manager 3. Management domain 107 includes Edge Router (ER) 110, Core Router (CR) 111 and Border Router (BR) 112. The ER may import call traffic of UE to the bearer network or export the call traffic of UE from the bearer network. Management domains 108 and 109 include CRs and BRs, too.

As shown in Fig.1, in the process of calling UE 1 calling called UE 2 and establishing a call connection, CA 1 is a calling CA, CA 2 is a called CA, ER 1 (110) is in management domain 107 of bearer network resource manager 1 and may import this call traffic to the bearer network, and bearer network resource manager 1 is a calling bearer network resource manager managed by CA 1. ER 2 (113) is in management domain 109 of bearer network resource manager 3 and may export this call traffic from the bearer network, and bearer network resource manager 3 is a called bearer network resource manager managed by CA 2. Bearer network resource manager 2 (105) is another bearer network resource manager by which this call traffic passes, which is called a midway bearer network resource manager herein, and management domain 108 is a management domain of bearer network resource manager 2 (105). In some cases, there may be no midway bearer network resource manager, e.g., ER 1 and ER 2 is in the management domain of one bearer network resource manager. Alternatively, there may be multiple midway bearer network resource managers. In Fig.1, there are multiple management domains, i.e., management domains 107, 108 and 109, in a single separate operating network. However, a service connection may cross multiple separate operating networks and each separate operating network has CAs, bearer network resource managers and a bearer network.

The above-mentioned bearer network resource manager may be called a Connection Manager (CM) in the embodiments of the present invention.

In the process of establishing the call connection of an end-to-end service including a voice service and a video service, after receiving the call request of calling UE 1, CA 1 negotiates with CA 2 for determining communication capabilities such as the type of the UE, encoding method for the traffic and QoS parameters. After negotiating successfully, CA 1 sends a forward resource request to CM 1, CA 2 sends a backward resource request to CM 3. The forward resource request and the backward resource request carry the resources requirements and QoS parameters acquired through the negotiation. After receiving the forward resource request, CM 1 requests, downward hop by hop, a forward QoS policy meeting the resource requirements and QoS parameters and reserves path resources. After receiving the backward resource request, CM 3 requests, upward hop by hop, a backward QoS policy meeting the resource requirements and QoS parameters and reserves path resources. After each CM allocates a QoS policy, the backward QoS policy is sent to CM 3 and the forward QoS policy is sent to CM 1. CM 1 issues the forward QoS policy to ER 1 in the bearer network and CM 3 issues the backward QoS policy to ER 2 in the bearer network. Both the forward QoS policy and the backward QoS policy carry path information from the calling to the called and 5-tuple information. After respectively receiving the forward QoS policy and the backward QoS policy, ER 1 and ER 2 start to forward traffic matching their respective QoS policy. The match between a QoS policy and traffic means that the 5-tuple information in the QoS policy matches the 5-tuple information in the traffic. The call connection is established successfully after the forward QoS policy and the backward QoS policy are issued, and then CA 1 sends a response to UE 1 to notify UE 1 to start to send traffic.

However, in the related art, the bearer network resource manager cannot precisely control the ER in the bearer network whether to forward traffic, which may result in the following issues.

When multiple CAs are concerned, both the calling CA and other CAs related to the current call need to instruct the CMs managed by themselves to allocate QoS policies and reserve resources for the current call and issue the QoS policies. The call connection is established successfully until all CAs related to the current call allocate the QoS policies and reserve the resources, and then CA 1 may notify the calling UE to send traffic. The call connection cannot be established successfully if a certain CA fails to allocate a QoS policy and reserve resources. However, the ER receiving the QoS policy may be able to forward traffic matching the received QoS policy. In this way, if the ER receiving the QoS policy forwards traffic once receiving the traffic matching the QoS policy, the traffic will be imported to the bearer network before the call connection is established successfully. As a result, exact traffic amount cannot be acquired, and thus charging based on traffic amount is difficult. That is, it is difficult to charge for the traffic before the call connection is established successfully so as to cause loss to the operator. In addition, if certain UE usurps the 5-tuple information of the calling LIE to send traffic to the ER, the ER may also forward the traffic. Thus, loss is brought to the actual calling user.

US 2004/215817 A1 discloses that a method for providing guaranteed QoS in an IP network, which includes: a relevant service entity of the network sends a route selection and resource application request to the bearer control layer of the network after a subscriber initiates a service request with guaranteed QoS requirement; the bearer network resource manager of the bearer control layer allocates route and resource for this service in the bearer logic network; the traffic stream is forwarded in the service bearer logic network according to the route allocated by the bearer control layer.

### Summary of the Invention

Embodiments of the present invention provide a method for forwarding traffic in a bearer network so as to precisely control the bearer network whether to forward the traffic.

A method for forwarding traffic in a bearer network includes:
instructing, by a Call Agent (CA) related to a service call, a bearer network resource manager managed by the CA to allocate a first Quality of Service (QoS) policy and reserve resources for the service call;
determining, by the CA, whether a bearer network resource manager managed by any other CA related to the service call allocates a second QoS policy and reserves resources for the service call;
issuing, by the bearer network resource manager managed by the CA, the first QoS policy to an edge device in a management domain if the bearer network resource manager managed by any other CA related to the service call allocates the second QoS policy and reserves the resources for the service call, the management domain being managed by the bearer network resource manager managed by the CA;
forwarding, by the edge device, traffic matching the first QoS policy.

The determining, by the CA, whether the bearer network resource manager managed by any other CA related to the service call allocates the second QoS policy and reserves the resources includes:
determining, by the CA, that the bearer network resource manager managed by any other CA related to the service call allocates the second QoS policy and reserves
the resources if the CA receives a resource reserving success messages from any other CA related to the service call, the resource reserving success message being sent by any other CA related to the service call after the bearer network resource manager managed any other CA related to the service call allocates the second QoS policy and reserving the resources.

The method further includes:
issuing, by the bearer network resource manager managed by the CA, to the edge device an instruction forbidding forwarding the traffic matching the first QoS policy during forwarding by the edge device the traffic matching the first QoS policy;
stopping, by the edge device, forwarding the traffic matching the first QoS policy after receiving the instruction forbidding forwarding the traffic matching the first QoS policy; and
continuing, by the edge device, forwarding the traffic matching the first QoS policy after receiving an instruction allowing forward the traffic matching the first QoS policy from the bearer network resource manager managed by the CA.

The instruction forbidding forwarding the traffic matching the first QoS policy and the instruction allowing forwarding the traffic matching the first QoS policy are issued to the edge device through traffic state information.

The stopping forwarding the traffic matching the first QoS policy includes:
turning off, by the edge device, a gated switch for managing the edge device whether to forward the traffic matching the first QoS policy when receiving traffic state information containing an instruction forbidding forwarding the traffic matching the first QoS policy to stop forwarding the traffic matching the first QoS policy;
the continuing forwarding the traffic matching the first QoS policy comprises:
   turning on, by the edge device, the gated switch when receiving traffic state information containing an instruction allowing forwarding the traffic matching the first QoS policy to continue forwarding the traffic matching the first QoS policy.

The first QoS policy is matched with.the traffic through 5-tuple information.

The edge device is an Edge Router (ER).

There is at least one CA related to the service call.

A method for forwarding traffic in a bearer network includes:
instructing, by a Call Agent, CA, related to a service call, a bearer network resource manager managed by the CA to allocate a first Quality of Service, QoS, policy and reserve resources for the service call;
issuing, by the bearer network resource manager managed by the CA, the first QoS policy and an instruction forbidding forwarding traffic matching the first QoS policy to an edge device in a management domain, the management domain being managed by the bearer network resource manager managed by the CA;
determining, by the CA, whether a bearer network resource manager managed by any other CA related to the service call allocates a second QoS policy and reserves resources for the service call;
forwarding, by the edge device, the traffic matching the first QoS policy if the bearer network resource manager managed by any other CA related to the service call allocates the second QoS policy and reserves the resources for the service call:

The forwarding, by the edge device, the traffic matching the first QoS policy includes:
receiving, by the edge device, an instruction allowing forwarding the traffic matching the first QoS policy from the bearer network resource manager managed by the CA, the instruction allowing forwarding the traffic matching the first QoS policy being issued by the bearer network resource manager managed by the CA after the bearer network resource manager managed by any other CA related to the service call allocates the second QoS policy and reserve the resources for the service call;
forwarding, by the edge device, the traffic matching the first QoS policy after receiving the instruction allowing forwarding the traffic matching the first QoS policy.

The determining whether the bearer network resource manager managed by any other CA related to the service call allocates the second QoS policy and reserves the resources includes:
determining, by the CA, that the bearer network resource manager managed by any other CA related to the service call allocates the second QoS policy and reserves the resources if the CA receives a resource reserving success messages from any other CA related to the service call, the resource reserving success message being sent by any other CA related to the service call after the bearer network resource manager managed any other CA related to the service call allocates the second QoS policy and reserving the resources.

The method further includes:
issuing, by the bearer network resource manager managed by the CA, to the edge device an instruction forbidding forwarding the traffic matching the first QoS policy during forwarding by the edge device the traffic matching the first QoS policy;
stopping, by the edge device, forwarding the traffic matching the first QoS policy after receiving the instruction forbidding forwarding the traffic matching the first QoS policy; and
continuing, by the edge device, forwarding the traffic matching the first QoS policy after receiving an instruction allowing forward the traffic matching the first QoS policy from the bearer network resource manager managed by the CA.

The instruction forbidding forwarding the traffic matching the first QoS policy and the instruction allowing forwarding the traffic matching the first QoS policy are issued to the edge device through traffic state information.

The stopping forwarding the traffic matching the first QoS policy includes:
turning off, by the edge device, a gated switch for managing the edge device whether to forward the traffic matching the first QoS policy when receiving traffic state information containing an instruction forbidding forwarding the traffic matching the first QoS policy to stop forwarding the traffic matching the first QoS policy;
the continuing forwarding the traffic matching the first QoS policy comprises:
   turning on, by the edge device, the gated switch when receiving traffic state information containing an instruction allowing forwarding the traffic matching the first QoS policy to continue forwarding the traffic matching the first QoS policy.

A system for forwarding traffic in a bearer network includes:
a Call Agent (CA) related to a service call, a bearer network resource manager managed by the CA and an edge device in a management domain managed by the bearer network resource manager managed by the CA; wherein
the CA is configured to instruct the bearer network resource manager managed by the CA to allocate a first Quality of Service (QoS) policy and reserve resources for the service call, determine whether a bearer network resource manager managed by any other CA related to the service call allocates a second QoS policy and reserves resources;
the bearer network resource manager managed by the CA is configured to issue the first QoS policy to the edge device in the management domain if the bearer network source manager managed by any other CA related to the service call allocates the second QoS policy and reserving the resource for the service call;
the edge device is configured to forward traffic matching the first QoS policy.

The bearer network resource manager managed by any other CA related to the service call sends a resource reserving success message after allocating the second QoS policy and reserving the resources for the service call;
the CA determines that the bearer network resource manager managed by any other CA related to the service call allocates the second QoS policy and reserves the resources for the service call after receiving the resource reserving success message sent by any other CA.

The system further includes:
a gated switch, configured to manage the edge device whether to forward the traffic matching the first QoS policy; wherein
the edge device turns off the gated switch when receiving traffic state information containing an instruction forbidding forwarding the traffic matching the first QoS policy to stop forwarding the traffic matching the first QoS policy;
the edge device turns on the gated switch when receiving traffic state information containing an instruction allowing forwarding the traffic matching the first QoS policy to continue forwarding the traffic matching the first QoS policy.

A system for forwarding traffic in a bearer network includes:
a Call Agent, CA, related to a service call, a bearer network resource manager managed by the CA and an edge device in a management domain managed by the bearer network resource manager managed by the CA; wherein
the CA is configured to instruct the bearer network resource manager managed by the CA to allocate a first Quality of Service, QoS, policy and reserve resources for the service call, and determine whether a bearer network resource manager managed by any other CA related to the service call allocates a second QoS policy and reserves resources for the service call;
the bearer network resource manager managed by the CA is configured to issue the first QoS policy and an instruction forbidding forwarding traffic matching the first QoS policy to the edge device in the management domain;
the edge device is configured to forward the traffic matching the first QoS policy if the CA determines that the bearer network resource manager managed by any other CA related to the service call allocates the second QoS policy and reserves the resources for the service call.

The bearer network resource manager managed by any other CA related to the service call sends a resource reserving success message after allocating the second QoS policy and reserving the resources for the service call;
the CA determines that the bearer network resource manager managed by any other CA related to the service call allocates the second QoS policy and reserves the resources for the service call after receiving the resource reserving success message sent by any other CA.

The system further includes:
a gated switch, configured to manage the edge device whether to forward the traffic matching the first QoS policy; wherein
the edge device turns off the gated switch when receiving traffic state information containing an instruction forbidding forwarding the traffic matching the first QoS policy to stop forwarding the traffic matching the first QoS policy;
the edge device turns on the gated switch when receiving traffic state information containing an instruction allowing forwarding the traffic matching the first QoS policy to continue forwarding the traffic matching the first QoS policy.
In the method and systems of the embodiments of the present invention, the QoS policy is issued to the edge device in the bearer network after the CAs related to the call successfully allocate QoS policies and reserve resources, and the edge device starts to forward traffic matching the QoS policy after receiving the QoS policy Alternatively, each CA related to the call issues the QoS policy once successfully allocating the QoS policy and reserving the resources, but the edge device does not forward traffic matching the QoS policy after receiving the QoS policy, and till CAs related to the call successfully allocate QoS policies, reserve resources and issue the QoS policies, the edge device is controlled to forward traffic matching the received QoS policy Thus, the issue of the QoS policy may be precisely controlled, and the bearer network is also controlled precisely whether to forward traffic. Therefore, it is avoided effectively that traffic enters the bearer network before the service connection is established successfully, and the exact traffic amount may be acquired and the service connection may be managed effectively. For example, charging based on traffic amount may be implemented exactly. In addition, since the bearer network does not forward traffic matching the QoS policy before the service connection is established successfully, illegal traffic are prevented from entering the bearer network before the service connection is established, and thus the communication security of UE are improved.

In the embodiments of the present invention, a gated switch is set in the edge device to control the edge device whether to forward traffic matching the QoS policy. Moreover, the gated switch may be turned off when the UE does not communicate using the QoS policy for the moment. Thus, it may be avoided that the QoS policy and the resources of a user is usurped.

In addition, after the resources are reserved for the call in the service layer, the bearer network may be controlled flexibly with the gated switch to allow or forbid forwarding traffic. The reserved resources do not need to be released when the traffic pauses while reserved resources also do not need to be applied again when the traffic is resumed again. Thus, the resource utilization efficiency of the bearer network is improved greatly and a more flexible resource reserving method of the service layer is provided, which is convenient for deploying rich Next Generation Network (NGN) valued added services with demand for QoS in an IP telecommunication network. For example, for a call hold service of the NGN, the bearer network is controlled with a gated switch to allow or forbid forwarding traffic based on keeping the reserved resources for the call so as to flexibly switch the call between connection and disconnection and meet the demand of the call hold service.

### Brief Description of the Drawings

Fig.1 shows a conventional Diff-Serv model with a separate bearer control layer.
Fig.2 shows a flow chart illustrating a method for forwarding traffic in a bearer network in accordance with an embodiment of the present invention.
Fig.3 shows a flow chart illustrating a method for forwarding traffic in a bearer network in accordance with another embodiment of the present invention.
Fig.4 shows a flow chart illustrating a process of establishing a service connection and forwarding bi-directional traffic in a bearer network in which the service layer adopts the Session Initiation Protocol (SIP) in accordance with an embodiment of the present invention.

### Detailed Description of the Invention

The present invention is hereinafter described in detail with reference to the accompany drawings and specific embodiments.

If UE and a CA adopt different protocols, support and deal with the protocols in different ways, processing procedures of the UE and the CA are different. In the Diff-Serv model with a separate bearer control layer, the SIP is usually adopted. In the following embodiment, a method for forwarding traffic is described, in which the SIP is adopted.

The following embodiment is described by an example in which bi-directional service connection is established.

The edge device in the embodiments of the present invention may be an ER or a network element device with the function of a Label Edge Router (LER).

Fig.2 shows a flow chart illustrating a method for forwarding traffic in a bearer network in accordance with an embodiment of the present invention. As shown in Fig.2, the processing procedure is included in the process of establishing a service call connection and includes the steps as follows.

Step 201: Each of CAs related to the current call instructs the CM managed by the CA to allocate a QoS policy and reserve resources for the current call, and sends a resource reserving success message to other CAs related to the current call after successfully allocating the QoS policy and reserving the resources.

Steps 202-204: Each of the CAs determines whether the CMs managed by other CAs related to the current call successfully allocate QoS policies and reserve resources for the current call, that is, determines whether each of the CAs receives the resource reserving success messages sent by other CAs; if yes, the CM managed by the CA issues the QoS policy to an edge device in the management domain managed by the CM; otherwise, the CA removes the QoS policy and releases the resources.

Step 205: The edge device receiving the QoS policy starts to forward traffic matching the received QoS policy.

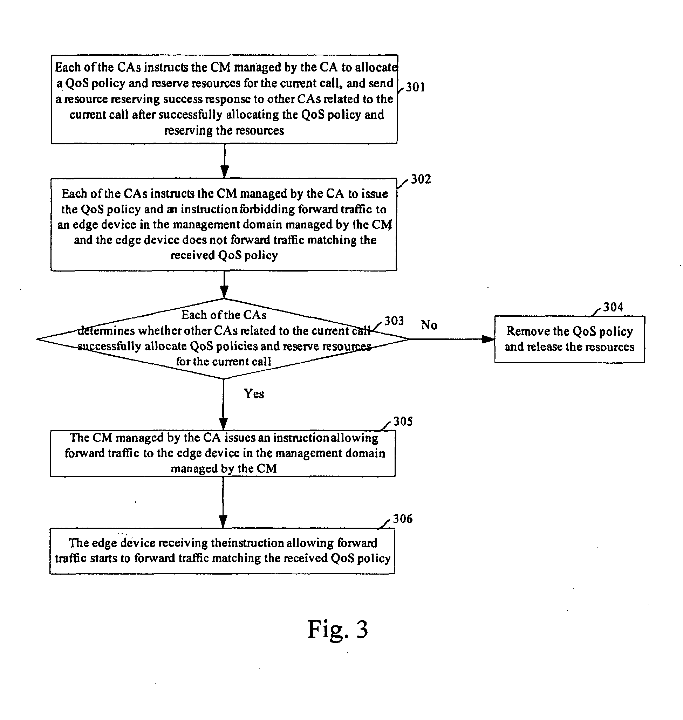

Fig.3 shows a flow chart illustrating a method for forwarding traffic in a bearer network in accordance with another embodiment of the present invention. As shown in Fig.3, the processing procedure is included in the process of establishing a service call connection and includes the steps as follows.

Step 301: Each of the CAs related to the current call instructs the CM managed by the CA to allocate a QoS policy and reserve resources for the current call, and sends a resource reserving success message to other CAs related to the current call after the CM managed by the CA successfully allocates the QoS policy and reserves the resources.

Step 302: Each of the CAs instructs the CM managed by the CA to issue the QoS policy and an instruction forbidding forward traffic to an edge device in the management domain managed by the CM, and the edge device receiving the QoS policy and the instruction forbidding forward traffic does not forward traffic matching the received QoS policy.

Steps 303-305: Each of the CAs determines whether to receive the resource reserving success messages sent by other CAs related to the current call; if yes, the CA instructs the CM managed by the CA to issue an instruction allowing forward traffic to the edge device in the management domain managed by the CM; otherwise, the CA removes the QoS policy and releases the resources.

Step 306: The edge device determines whether to receive the instruction allowing forward traffic; if yes, starts to forward traffic matching the received QoS policy.

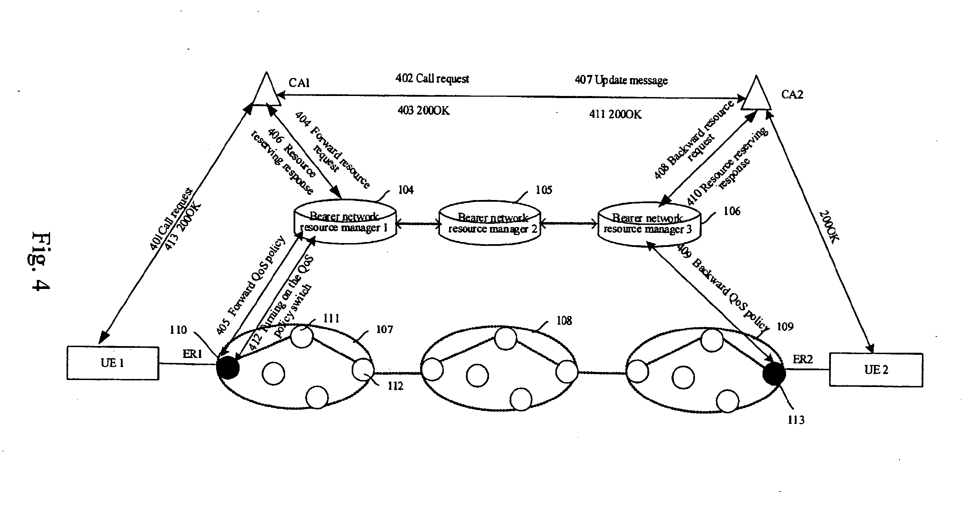

Fig.4 shows a flow chart illustrating a process of establishing a service connection and forwarding bi-directional traffic in a bearer network in which the service layer adopts the SIP in accordance with an embodiment of the present invention. As shown in Fig.4, CA 1 is a calling CA, CA 2 is a called Cm, ER 1 is in the management domain managed by CM 1 and may import the traffic of this call to the bearer network, and CM 1 is the calling CM managed by CA 1. ER 2 is in the management domain managed by CM 3 and may export the traffic of this call from the bearer network, and CM3 is the called CM managed by CA 2. CM 2 is a midway CM by which this call request passes.

As shown in Fig.4, the process includes the steps as follows.

Step 401: CA I receives a call request (invite) sent by UE 1.

Steps 402~403: CA 1 sends to CA 2 a call request carrying negotiation parameters of the communication capability of the calling side, such as the type of UE, decoding method of traffic and QoS parameters. After receiving the call request, CA 2 returns to CA 1 a 200 OK response carrying negotiation parameters of the communication capability of the called side. After receiving the 200 OK response, CA 1 acquires the communication capabilities of the calling side and the called side, that is, CA 1 acquires the resource requirements and QoS parameters including a delay parameter, a packet loss rate and a jitter.

Step 404: CA 1 sends a forward resource request carrying the negotiated resource requirements and QoS parameters to CM 1. After receiving the forward resource request, CM 1 sends the forward resource request downward hop by hop till the path calculation of this separate operating network is completed or till the home CM of UE 2, e.g., CM 3 in this embodiment, is reached. Each CM receiving the forward resource request selects a forward QoS policy meeting the resource requirements and the QoS parameters for the call, e.g., a forward intra-domain policy route and a forward inter-domain policy route, and reserves the forward path resources. The forward intra-domain policy route is a forward policy route in the management domain managed by the CM while the forward inter-domain policy route is a forward policy route between the management domain managed by the CM and the management domain managed by the CM of the next hop. Each of the CMs forwards the selected forward QoS policy to the CM 1 with a response message after selecting the forward QoS policy and reserving the forward path resources.

In Step 404, if a CM reserves the forward path resources successfully, the response message includes information of successfully reserving forward path resources; otherwise, the response message includes information of unsuccessfully reserving forward path resources.

In addition, the calculating method for each CM selecting the forward intra-domain policy route and the forward inter-domain policy route in Step 404 may be referred to in Chinese patents 03126471.9, 03160068.9 and 03156821.1, and will not be described herein.

Step 405: CM 1 determines whether the received response message includes the information of successfully reserving forward path resources; if yes, CM 1 issues the forward QoS policy and traffic state information to ER 1 and performs Step 406; otherwise, CM 1 returns a resource reserving failure response to CA 1 and Step 407 is performed.

In the present invention, a QoS policy gated switch is set in the ER in the bearer network for managing the ER whether to forward traffic matching the forward QoS policy or the backward QoS policy. When the QoS policy gated switch is turned on, the ER forwards traffic matching the QoS policy; when the QoS policy gated switch is turned off, the ER does not forward traffic matching the QoS policy. The traffic state information carries instruction information for managing the QoS policy gated switch and a traffic identifier. The instruction information includes an instruction allowing forward traffic and an instruction forbidding forward traffic for turning on and turning off the QoS policy gated switch, respectively. The traffic identifier is 5-tuple information corresponding to the QoS policy and the 5-tuple information corresponding to the QoS policy matches 5-tuple information of the traffic allowed or forbidden to be forwarded.

In Step 405, the traffic state information carries information for turning off the QoS policy gated switch, e.g., the instruction forbidding forward traffic, and the 5-tuple information corresponding to the QoS policy is the 5-tuple information of the forward QoS policy.

After receiving the forward QoS policy and the traffic state information, ER 1 reads the traffic state information and acquires the instruction forbidding forward traffic and the 5-tuple information of the forward QoS policy, and then turns off the QoS policy gated switch. Thus, even if receiving forward traffic matching the 5-tuple information of the forward QoS policy, ER 1 does not forward the forward traffic.

Alternatively, Step 405 may include the steps of: CM 1 does not issue the QoS policy but performs Step 406 directly.

Step 406: CM 1 returns a resource reserving success response to CA1.

Step 407: CA 1 determines whether the received resource reserving response is a resource reserving success response; if yes, CA 1 sends to CA 2 a update (UPDATE) message indicating that CA 1 agrees with the negotiation parameters of communication capability of CA 2 and carrying a forward path resource reserving result, which is equivalent to a resource reserving success message and indicates that CA 1 successfully reserves resources for the current call; otherwise, CA 1 removes the QoS policy and releases the reserved forward path resources.

Step 408: After receiving the update message, CA 2 sends a backward resource request carrying the negotiated resource requirements and QoS parameters to CM 3. After receiving the backward resource request, CM 3 sends the backward resource request to the CM of the last hop till CM 1 is reached. Each CM receiving the backward resource request selects a backward QoS policy meeting the resource requirements and the QoS parameters for the current call and reserves the backward path resources. The backward QoS policy includes a backward intra-domain policy route and a backward inter-domain policy route. The backward intra-domain policy route is a backward policy route in the management domain managed by the CM, and the backward inter-domain policy route is a backward policy route between the management domain managed by the CM and the management domain managed by the CM of the last hop. Each of the CMs forwards the selected backward QoS policy to the CM 3 with a response message after selecting the backward QoS policy and reserving the backward path resources.

In Step 408, if the CM reserves the backward path resources successfully, the response message includes information of successfully reserving backward path resources; otherwise, the response message includes information of unsuccessfully reserving backward path resources.

In addition, the calculation method for each CM selecting the backward QoS policy in Step 408 may be referred to in Chinese patents 03126471.9, 03160068.9 and 03156821.1, and will not be described herein.

Step 409: CM 3 determines whether the received response message includes information of successfully reserving backward path resources; if yes, CM 3 issues the backward QoS policy and traffic state information to ER 2 and performs Step 410; otherwise, CM 3 returns a resource reserving failure response to CA 2 and Step 411 is performed.

Step 410: CM 3 returns a resource reserving success response to CA 2.

In Step 410, the traffic state information carries an instruction allowing forward traffic for turning on the QoS policy gated switch and the 5-tuple information matching the backward QoS policy. If ER 2 receives backward traffic matching the backward QoS policy, ER 2 forwards the backward traffic after receiving the traffic state information.

Step 411: CA 2 determines whether the received resource reserving response is a resource reserving success response; if yes, CA 2 sends to CA 1 a 200 OK message indicating that CA 2 agrees with the negotiation parameters of communication capability of CA 1 and a forward path resource reserving result in the update message and carrying a backward path resource reserving result, which is equivalent to a resource reserving success message, and sends a 200 OK response to UE 2; otherwise, CA 2 removes the QoS policy and releases the reserved backward path resources, and returns a resource reserving failure message to CA 1.

Step 412: CA 1 receives the response message of CA 2; if the response message is a 200 OK message, CA 1 instructs CM 1 to issue to ER 1 traffic state information carrying an instruction allowing forward traffic for turning on the QoS policy gated switch and the 5-tuple information matching the forward QoS policy, and CM I returns an execution response to CA 1 after issuing the traffic state information. After receiving the traffic state information, ER 1 forwards forward traffic matching the 5-tuple of the forward QoS policy based on the route of the forward QoS policy if ER 1 receives the forward traffic.

Alternatively, if CM 1 does not issue the forward QoS policy, CA 1 instructs CM 1 to issue the forward QoS policy and traffic state information carrying an instruction allowing forward traffic to ER 1. CM 1 returns an execution response to CA 1 after issuing the forward QoS policy and the traffic state information. After receiving the forward QoS policy and the allowing forward instruction, ER 1 forwards forward traffic matching the forward QoS policy based on the forward QoS policy if ER 1 receives the forward traffic.

CA 1 removes the QoS policy and releases the reserved forward path resources if CA 1 receives a resource reserving failure response.

Step 413: CA 1 sends a 200 OK message to UE 1 to notify UE 1 to start communicating after receiving the execution response of CM 1, and the traffic sent by UE 1 is forwarded to UE 2 through the bearer network.

In the embodiments of the present invention, if the resource manager supports applying for bi-directional path resources only once, CA 1 sends a bi-directional resource request to CM 1 in Step 404. After receiving the bi-directional resource request, CM1 sends the bi-directional resource request downward hop by hop till CM 3 is reached. Each CM receiving the bi-directional resource request selects a bi-directional QoS policy meeting the resource requirements and the QoS parameters for the current call and reserves bi-directional path resources. After selecting the bi-directional QoS policy and reserving the bi-directional path resources, each CM forwards the information of the selected forward QoS policy and the reserved forward path resources to CM 1 hop by hop with a response message, and forwards the information of the selected backward QoS policy and the reserved backward path resources to CM 3 hop by hop. CM 1 performs Steps 405 and 406, CM 3 performs Steps 409 and 410, and the operation of CA 1 and CA 2 is the same as that in the above process.

In the embodiment shown in Fig.4, the multiple bearer network resources managers are in a single separate operating network. If a service connection crosses multiple separate operating networks and relates to multiple CAs, the level number of CAs in the embodiments of the present invention increases correspondingly. However, the processing of the CAs, the CMs and the edge devices in the bearer network is the same as that in the embodiment shown in Fig.4. '

In the embodiments of the present invention, after a connection is established for a service call request, a CA may instruct the CM at any moment as demanded by the service to issue to the ER traffic state information for managing the QoS policy gated switch, and the traffic state information carries an instruction allowing forward traffic or an instruction forbidding forward traffic, and the 5-tuple information of the traffic allowed or forbidden to be forwarded. After receiving the traffic state information, if the traffic state information carries an instruction allowing forward traffic, the ER forwards the traffic based on the QoS policy matching the 5-tuple of the traffic after receiving traffic matching the 5-tuple information of the traffic allowed to be forwarded..If the traffic state information carries an instruction forbidding forward traffic, the ER does not forward the traffic after receiving traffic matching the 5-tuple information of the traffic forbidden to be forwarded. With the above method of the embodiments of the present invention, in an end-to-end service connection, the bearer network may be managed to forward or stop forwarding traffic at any moment. Therefore, the embodiments of the present invention provides a more flexible resource reserving method for the service layer, and are convenient for the development of an NGN value added service with demand for QoS. For example, the call hold service in the NGN allows UE to suspend the current call during the call, initiate a new call, and switch between the two calls after the new call is established. For the call hold service, when keeping the information of the original service connection, CA 1 and CM need to only issue an instruction of turning on or turning off the QoS policy gated switch of the original service connection to the ER in the bearer network so as to switch the call of the service connection between being turned on and being turned off and thus meet the demand of the call hold service. With the embodiments of the present invention, the QoS policy of an original service connection may also be prevented from being usurped. For example, once the 5-tuple information of a service connection is blabbed, another UE may use the 5-tuple information to send traffic to a called, and when the traffic reaches an ER in the bearer network, the ER forwards the traffic based on the original QoS policy since the 5-tuple information is the same as that of the original service connection. Thus, the QoS policy of the original service connection is usurped. In the embodiments of the present invention, a QoS policy gated switch is provided for a QoS policy, and the QoS policy of the original service connection will not be usurped if the QoS policy gated switch is in the state of "off".

When the service connection is disconnected for the moment, traffic state information for managing the QoS policy gated switch of the service connection is issued to the ER in the bearer network to set the QoS policy gated switch corresponding to the service connection as the state of "off', and thus the bearer network does not forward the traffic of the service connection. When the service connection is put through, traffic state information for managing the QoS policy gated switch of the service connection is issued to the ER in the bearer network to set the QoS policy gated switch of the service connection as the state of "on", and then the bearer network continues to forward the traffic of the service connection using the original QoS policy instead of applying a new QoS policy, and thus the resource utilization efficiency of the bearer network may be improved. While the QoS policy of original service connections is kept, a new service connection may apply for resources based on the process of the embodiments of the present invention.

The above process is a flow for establishing a bi-directional service connection. For the flow for establishing a unidirectional service connection, if multiple CAs reserve resources for the call of the service connection, the above method of the embodiments of the present invention may also be applied only if the process of allocating the backward QoS policy and reserving the resources is omitted.

The foregoing is only preferred embodiments of the present invention. The protection scope of the present invention, however, is not limited to the above description. Any change or substitution, within the technical scope disclosed by the present invention, easily occurring to those skilled in the art should be covered by the protection scope of the present invention.

## Claims

1. A method for forwarding traffic in a bearer network, comprising:
instructing (201), by a Call Agent, CA, related to a service call, a bearer network resource manager managed by the CA to allocate a first Quality of Service, QoS, policy and reserve resources for the service call; **characterized by**:
determining (202), by the CA, whether a bearer network resource manager managed by any other CA related to the service call, successfully allocates a second QoS policy and reserves resources for the service call;
issuing (204), by the bearer network resource manager managed by the CA, the first QoS policy to an edge device in a management domain if the bearer network resource manager managed by any other CA related to the service call, successfully allocates the second QoS policy and reserves the resources for the service call, the management domain being managed by the bearer network resource manager managed by the CA; and
forwarding (205), by,the edge device, traffic matching the first QoS policy.

2. The method of Claim 1, wherein the determining, by the CA, whether the bearer network resource manager managed by any other CA related to the service call allocates the second QoS policy and reserves the resources comprises:
determining, by the CA, that the bearer network resource manager managed by any other CA related to the service call allocates the second QoS policy and reserves the resources if the CA receives a resource reserving success message from any other CA related to the service call, the resource reserving success message being sent by any other CA related to the service call after the bearer network resource manager managed any other CA related to the service call allocates the second QoS policy and reserving the resources.

3. The method of Claim 1, further comprising:
issuing, by the bearer network resource manager managed by the CA, to the edge device an instruction forbidding forwarding the traffic matching the first QoS policy during forwarding by the edge device the traffic matching the first QoS policy;
stopping, by the edge device, forwarding the traffic matching the first QoS policy after receiving the instruction forbidding forwarding the traffic matching the first QoS policy; and
continuing, by the edge device, forwarding the traffic matching the first QoS policy after receiving an instruction allowing forward the traffic matching the first QoS policy from the bearer network resource manager managed by the CA.

4. The method of Claim 3, wherein the instruction forbidding forwarding the traffic matching the first QoS policy and the instruction allowing forwarding the traffic matching the first QoS policy are issued to the edge device through traffic state information.

5. The method of Claim 3, wherein the stopping forwarding the traffic matching the first QoS policy comprises:
turning off, by the edge device, a gated switch for managing the edge device whether to forward the traffic matching the first QoS policy when receiving traffic state information containing an instruction forbidding forwarding the traffic matching the first QoS policy to stop forwarding the traffic matching the first QoS policy;
the continuing forwarding the traffic matching the first QoS policy comprises:
turning on, by the edge device, the gated switch when receiving traffic state information containing an instruction allowing forwarding the traffic matching the first QoS policy to continue forwarding the traffic matching the first QoS policy.

6. The method of Claim 1, wherein the first QoS policy is matched with the traffic through 5-tuple information.

7. The method of Claim 1, 3 or 6, wherein the edge device is an Edge Router (ER).

8. The method of Claim 1, wherein there is at least one CA related to the service call.

9. A method for forwarding traffic in a bearer network, comprising:
instructing (301), by a Call Agent, CA, related to a service call, a bearer network resource manager managed by the CA to allocate a first Quality of Service, QoS, policy and reserve resources for the service call; **characterized in that** the method comprises:
issuing (302), by the bearer network resource manager managed by the CA, the first QoS policy and an instruction forbidding forwarding traffic matching the first QoS policy to an edge device in a management domain, the management domain being managed by the bearer network resource manager managed by the CA;
determining (303), by the CA, whether a bearer network resource manager managed by any other CA related to the service call, successfully allocates a second QoS policy and reserves resources for the service call;
forwarding (306), by the edge device, the traffic matching the first QoS policy if the bearer network resource manager managed by any other CA related to the service call, successfully allocates the second QoS policy and reserves the resources for the service call.

10. The method of Claim 9, wherein the forwarding, by the edge device, the traffic matching the first QoS policy comprises:
receiving (305), by the edge device, an instruction allowing forwarding the traffic matching the first QoS policy from the bearer network resource manager managed by the CA, the instruction allowing forwarding the traffic matching the first QoS policy being issued by the bearer network resource manager managed by the CA after the bearer network resource manager managed by any other CA related to the service call allocates the second QoS policy and reserve the resources for the service call;
forwarding (306), by the edge device, the traffic matching the first QoS policy after receiving the instruction allowing forwarding the traffic matching the first QoS policy.

11. The method of Claim 9, wherein the determining whether the bearer network resource manager managed by any other CA related to the service call allocates the second QoS policy and reserves the resources comprises:
determining, by the CA, that the bearer network resource manager managed by any other CA related to the service call allocates the second QoS policy and reserves the resources if the CA receives a resource reserving success message from any other CA related to the service call, the resource reserving success message being sent by any other CA related to the service call after the bearer network resource manager managed any other CA related to the service call allocates the second QoS policy and reserving the resources.

12. The method of Claim 9, further comprising:
issuing, by the bearer network resource manager managed by the CA, to the edge device an instruction forbidding forwarding the traffic matching the first QoS policy during forwarding by the edge device the traffic matching the first QoS policy;
stopping, by the edge device, forwarding the traffic matching the first QoS policy after receiving the instruction forbidding forwarding the traffic matching the first QoS policy; and
continuing, by the edge device, forwarding the traffic matching the first QoS policy after receiving an instruction allowing forward the traffic matching the first QoS policy from the bearer network resource manager managed by the CA.

13. The method of Claim 9, wherein the instruction forbidding forwarding the traffic matching the first QoS policy and the instruction allowing forwarding the traffic matching the first QoS policy are issued to the edge device through traffic state information.

14. The method of Claim 12, wherein the stopping forwarding the traffic matching the first QoS policy comprises:
turning off, by the edge device, a gated switch for managing the edge device whether to forward the traffic matching the first QoS policy when receiving traffic state information containing an instruction forbidding forwarding the traffic matching the first QoS policy to stop forwarding the traffic matching the first QoS policy;
the continuing forwarding the traffic matching the first QoS policy comprises:
turning on, by the edge device, the gated switch when receiving traffic state information containing an instruction allowing forwarding the traffic matching the first QoS policy to continue forwarding the traffic matching the first QoS policy.

15. A system for forwarding traffic in a bearer network, comprising:
a Call Agent, CA, related to a service call, a bearer network resource manager managed by the CA and an edge device in a management domain managed by the bearer network resource manager managed by the CA; **characterized in that**:
the CA is configured to instruct the bearer network resource manager managed by the CA to allocate a first Quality of Service, QoS, policy and reserve resources for the service call, determine whether a bearer network resource manager managed by any other CA related to the service call, successfully allocates a second QoS policy and reserves resources;
the bearer network resource manager managed by the CA is configured to issue the first QoS policy to the edge device in the management domain if the bearer network source manager managed by any other CA related to the service call, successfully allocates the second QoS policy and reserving the resource for the service call; and
the edge device is configured to forward traffic matching the first QoS policy.

16. The system of Claim 15, wherein the bearer network resource manager managed by any other CA related to the service call sends a resource reserving success message after allocating the second QoS policy and reserving the resources for the service call; the CA determines that the bearer network resource manager managed by any other CA related to the service call allocates the second QoS policy and reserves the resources for the service call after receiving the resource reserving success message sent by any other CA.

17. The system of Claim 15, further comprising:
a gated switch, configured to manage the edge device whether to forward the traffic matching the first QoS policy; wherein
the edge device turns off the gated switch when receiving traffic state information containing an instruction forbidding forwarding the traffic matching the first QoS policy to stop forwarding the traffic matching the first QoS policy;
the edge device turns on the gated switch when receiving traffic state information containing an instruction allowing forwarding the traffic matching the first QoS policy to continue forwarding the traffic matching the first QoS policy

18. A system for forwarding traffic in a bearer network, comprising:
a Call Agent, CA, related to a service call, a bearer network resource manager managed by the CA and an edge device in a management domain managed by the bearer network resource manager managed by the CA; **characterized in that**:
the CA is configured to instruct the bearer network resource manager managed by the CA to allocate a first Quality of Service, QoS, policy and reserve resources for the service call, and determine whether a bearer network resource manager managed by any other CA related to the service call, successfully allocates a second QoS policy and reserves resources for the service call;
the bearer network resource manager managed by the CA is configured to issue the first QoS policy and an instruction forbidding forwarding traffic matching the first QoS policy to the edge device in the management domain; and
the edge device is configured to forward the traffic matching the first QoS policy if the CA determines that the bearer network resource manager managed by any other CA related to the service call, successfully allocates the second QoS policy and reserves the resources for the service call.

19. The system of Claim 18, wherein the bearer network resource manager managed by any other CA related to the service call sends a resource reserving success message after allocating the second QoS policy and reserving the resources for the service call; the CA determines that the bearer network resource manager managed by any other CA related to the service call allocates the second QoS policy and reserves the resources for the service call after receiving the resource reserving success message sent by any other CA.

20. The system of Claim 18, further comprising:
a gated switch, configured to manage the edge device whether to forward the traffic matching the first QoS policy; wherein
the edge device turns off the gated switch when receiving traffic state information containing an instruction forbidding forwarding the traffic matching the first QoS policy to stop forwarding the traffic matching the first QoS policy;
the edge device turns on the gated switch when receiving traffic state information containing an instruction allowing forwarding the traffic matching the first QoS policy to continue forwarding the traffic matching the first QoS policy.

## Patentansprüche

1. Verfahren zum Weiterleiten von Verkehr in einem Trägernetz, wobei das Verfahren Folgendes umfasst:
Einführen (201) durch einen Gesprächsagenten, CA, in Bezug auf ein Dienstgespräch eines Trägernetz-Betriebsmittelmanagers, der durch den CA gemanagt wird, zum Zuordnen einer ersten Dienstgüte-Richtlinie, QoS-Richtlinie, und zum Reservieren von Betriebsmitteln für das Dienstgespräch; **gekennzeichnet durch**:
Bestimmen (202) **durch** den CA, ob ein Trägernetz-Betriebsmittelmanager, der **durch** irgendeinen anderen CA in Bezug auf das Dienstgespräch gemanagt wird, erfolgreich eine zweite QoS-Richtlinie zuordnet und Betriebsmittel für das Dienstgespräch reserviert;
Ausgeben (204) der ersten QoS-Richtlinie an eine Edge-Vorrichtung in einem Versorgungsbereich **durch** den Trägernetz-Betriebsmittelmanager, der **durch** den CA gemanagt wird, falls der Trägernetz-Betriebsmittelmanager, der **durch** irgendeinen anderen CA in Bezug auf das Dienstgespräch gemanagt wird, erfolgreich die zweite QoS-Richtlinie zuordnet und die Betriebsmittel für das Dienstgespräch reserviert, wobei der Versorgungsbereich **durch** den Trägernetz-Betriebsmittelmanager gemanagt wird, der durch den CA gemanagt wird; und
Weiterleiten (205) von Verkehr, der zu der ersten QoS-Richtlinie passt, **durch** die Edge-Vorrichtung.

2. Verfahren nach Anspruch 1, wobei das Bestimmen durch den CA, ob der Trägernetz-Betriebsmittelmanager, der durch irgendeinen anderen CA in Bezug auf das Dienstgespräch gemanagt wird, die zweite QoS-Richtlinie zuordnet und die Betriebsmittel reserviert, Folgendes umfasst:
Bestimmen durch den CA, dass der Trägernetz-Betriebsmittelmanager, der durch irgendeinen anderen CA in Bezug auf das Dienstgespräch gemanagt wird, die zweite QoS-Richtlinie zuordnet und die Betriebsmittel reserviert, falls der CA eine Betriebsmittelreservierungs-Erfolgsnachricht von irgendeinem anderen CA in Bezug auf das Dienstgespräch empfängt, wobei die Betriebsmittelreservierungs-Erfolgsnachricht durch irgendeinen anderen CA in Bezug auf das Dienstgespräch gesendet wird, nachdem der Trägernetz-Betriebsmittelmanager, der durch irgendeinen anderen CA in Bezug auf das Dienstgespräch gemanagt wird, die zweite QoS-Richtlinie zugewiesen hat und die Betriebsmittel reserviert hat.

3. Verfahren nach Anspruch 1, das ferner Folgendes umfasst:
Ausgeben einer Anweisung, die das Weiterleiten des Verkehrs, der zu der ersten QoS-Richtlinie passt, während des Weiterleitens des Verkehrs, der zu der ersten QoS-Richtlinie passt, durch die Edge-Vorrichtung verbietet, durch den Trägernetz-Betriebsmittelmanager, der durch den CA gemanagt wird, an die Edge-Vorrichtung;
Anhalten des Weiterleitens des Verkehrs, der zu der ersten QoS-Richtlinie passt, nach Empfang der Anweisung, die das Weiterleiten des Verkehrs, der zu der ersten QoS-Richtlinie passt, verbietet, durch die Edge-Vorrichtung; und
Fortsetzen des Weiterleitens des Verkehrs, der zu der ersten QoS-Richtlinie passt, durch die Edge-Vorrichtung nach Empfang einer Anweisung, die das Weiterleiten des Verkehrs, der zu der ersten QoS-Richtlinie passt, zulässt, von dem Trägernetz-Betriebsmittelmanager, der durch den CA gemanagt wird.

4. Verfahren nach Anspruch 3, wobei die Anweisung, die das Weiterleiten des Verkehrs, der zu der ersten QoS-Richtlinie passt, verbietet, und die Anweisung, die das Weiterleiten des Verkehrs, der zu der ersten QoS-Richtlinie passt, zulässt, über Verkehrszustandsinformationen an die Edge-Vorrichtung ausgegeben werden.

5. Verfahren nach Anspruch 3, wobei das Anhalten des Weiterleitens des Verkehrs, der zu der ersten QoS-Richtlinie passt, Folgendes umfasst:
Abschalten eines torgesteuerten Schalters zum Managen der Edge-Vorrichtung, ob der Verkehr, der zu der ersten QoS-Richtlinie passt, weitergeleitet wird, durch die Edge-Vorrichtung, wenn Verkehrszustandsinformationen empfangen werden, die eine Anweisung enthalten, die das Weiterleiten des Verkehrs, der zu der ersten QoS-Richtlinie passt, verbietet, um das Weiterleiten des Verkehrs, der zu der ersten QoS-Richtlinie passt, anzuhalten;
wobei das Fortsetzen des Weiterleitens des Verkehrs, der zu der ersten QoS-Richtlinie passt, Folgendes umfasst:
Einschalten des torgesteuerten Schalters durch die Edge-Vorrichtung beim Empfang von Verkehrszustandsinformationen, die eine Anweisung enthalten, die das Weiterleiten des Verkehrs, der zu der ersten QoS-Richtlinie passt, zulässt, um das Weiterleiten des Verkehrs, der zu der ersten QoS-Richtlinie passt, fortzusetzen.

6. Verfahren nach Anspruch 1, wobei die erste QoS-Richtlinie über 5-Tuple-Informationen an den Verkehr angepasst wird.

7. Verfahren nach Anspruch 1, 3 oder 6, wobei die Edge-Vorrichtung ein Edge-Router (ER) ist.

8. Verfahren nach Anspruch 1, wobei es wenigstens einen CA in Bezug auf das Dienstgespräch gibt.

9. Verfahren zum Weiterleiten von Verkehr in einem Trägernetz, wobei das Verfahren Folgendes umfasst:
Anweisen (301) durch einen Gesprächsagenten, CA, in Bezug auf ein Dienstgespräch,
dass ein Trägernetz-Betriebsmittelmanager, der durch den CA gemanagt wird, eine erste Dienstgüte-Richtlinie, QoS-Richtlinie, zuordnet und Betriebsmittel für das Dienstgespräch reserviert; **dadurch gekennzeichnet, dass** das Verfahren Folgendes umfasst:
Ausgeben (302) der ersten QoS-Richtlinie und einer Anweisung, die das Weiterleiten von Verkehr, der zu der ersten QoS-Richtlinie passt, verbietet, an eine Edge-Vorrichtung in einem Versorgungsbereich durch den Trägernetz-Betriebsmittelmanager, der durch den CA gemanagt wird, wobei der Versorgungsbereich durch den Trägernetz-Betriebsmittelmanager gemanagt wird, der durch den CA gemanagt wird;
Bestimmen (303) durch den CA, ob ein Trägernetz-Betriebsmittelmanager, der durch irgendeinen anderen CA in Bezug auf das Dienstgespräch gemanagt wird, erfolgreich eine zweite QoS-Richtlinie zuordnet und Betriebsmittel für das Dienstgespräch reserviert;
Weiterleiten (306) durch die Edge-Vorrichtung des Verkehrs, der zu der ersten QoS-Richtlinie passt, falls der Trägernetz-Betriebsmittelmanager, der durch irgendeinen anderen CA in Bezug auf das Dienstgespräch gemanagt wird, erfolgreich die zweite QoS-Richtlinie zuordnet und die Betriebsmittel für das Dienstgespräch reserviert.

10. Verfahren nach Anspruch 9, wobei das Weiterleiten des Verkehrs, der zu der ersten QoS-Richtlinie passt, durch die Edge-Vorrichtung Folgendes umfasst:
Empfangen (305) einer Anweisung, die das Weiterleiten des Verkehrs, der zu der ersten QoS-Richtlinie passt, zulässt, von dem Trägernetz-Betriebsmittelmanager, der durch den CA gemanagt wird, durch die Edge-Vorrichtung, wobei die Anweisung, die das Weiterleiten des Verkehrs, der zu der ersten QoS-Richtlinie passt, zulässt, durch den Trägernetz-Betriebsmittelmanager ausgegeben wird, der durch den CA gemanagt wird,
nachdem der Trägernetz-Betriebsmittelmanager, der durch irgendeinen anderen CA in Bezug auf das Dienstgespräch gemanagt wird, die zweite QoS-Richtlinie zugewiesen hat und die Betriebsmittel für das Dienstgespräch reserviert hat;
Weiterleiten (306) des Verkehrs, der zu der ersten QoS-Richtlinie passt, durch die Edge-Vorrichtung nach Empfang der Anweisung, die das Weiterleiten des Verkehrs, der zu der ersten QoS-Richtlinie passt, zulässt.

11. Verfahren nach Anspruch 9, wobei das Bestimmen, ob der Trägernetz-Betriebsmittelmanager, der durch irgendeinen anderen CA in Bezug auf das Dienstgespräch gemanagt wird, die zweite QoS-Richtlinie zuordnet und die Betriebsmittel reserviert, Folgendes umfasst:
Bestimmen durch den CA, dass der Trägernetz-Betriebsmittelmanager, der durch irgendeinen anderen CA in Bezug auf das Dienstgespräch gemanagt wird, die zweite QoS-Richtlinie zuordnet und die Betriebsmittel reserviert, falls der CA eine Betriebsmittelreservierungs-Erfolgsnachricht von irgendeinem anderen CA in Bezug auf das Dienstgespräch empfängt, wobei die Betriebsmittelreservierungs-Erfolgsnachricht durch irgendeinen anderen CA in Bezug auf das Dienstgespräch gesendet wird, nachdem der Trägernetz-Betriebsmittelmanager, der durch irgendeinen anderen CA in Bezug auf das Dienstgespräch gemanagt wird, die zweite QoS-Richtlinie zugewiesen hat und die Betriebsmittel reserviert hat.

12. Verfahren nach Anspruch 9, das ferner Folgendes umfasst:
Ausgeben einer Anweisung, die das Weiterleiten des Verkehrs, der zu der ersten QoS-Richtlinie passt, während des Weiterleitens des Verkehrs, der zu der ersten QoS-Richtlinie passt, durch die Edge-Vorrichtung verbietet, durch den Trägernetz-Betriebsmittelmanager, der durch den CA gemanagt wird, an die Edge-Vorrichtung;
Anhalten durch die Edge-Vorrichtung des Weiterleitens des Verkehrs, der zu der ersten QoS-Richtlinie passt, nach Empfang der Anweisung, die das Weiterleiten des Verkehrs, der zu der ersten QoS-Richtlinie passt, verbietet; und
Fortsetzen durch die Edge-Vorrichtung des Weiterleitens des Verkehrs, der zu der ersten QoS-Richtlinie passt, nach Empfang einer Anweisung, die das Weiterleiten des Verkehrs, der zu der ersten QoS-Richtlinie passt, zulässt, von dem Trägernetz-Betriebsmittelmanager, der durch den CA gemanagt wird.

13. Verfahren nach Anspruch 9, wobei die Anweisung, die das Weiterleiten des Verkehrs, der zu der ersten QoS-Richtlinie passt, verbietet, und die Anweisung, die das Weiterleiten des Verkehrs, der zu der ersten QoS-Richtlinie passt, zulässt, über Verkehrszustandsinformationen an die Edge-Vorrichtung ausgegeben werden.

14. Verfahren nach Anspruch 12, wobei das Anhalten des Weiterleitens des Verkehrs, der zu der ersten QoS-Richtlinie passt, Folgendes umfasst:
Abschalten eines torgesteuerten Schalters zum Managen der Edge-Vorrichtung, ob der Verkehr, der zu der ersten QoS-Richtlinie passt, weitergeleitet wird, durch die Edge-Vorrichtung, wenn Verkehrszustandsinformationen empfangen werden, die eine Anweisung enthalten, die das Weiterleiten des Verkehrs, der zu der ersten QoS-Richtlinie passt, verbietet, um das Weiterleiten des Verkehrs, der zu der ersten QoS-Richtlinie passt, anzuhalten;
wobei das Fortsetzen des Weiterleitens des Verkehrs, der zu der ersten QoS-Richtlinie passt, Folgendes umfasst:
Einschalten des torgesteuerten Schalters durch die Edge-Vorrichtung beim Empfang von Verkehrszustandsinformationen, die eine Anweisung enthalten, die das Weiterleiten des Verkehrs, der zu der ersten QoS-Richtlinie passt, zulässt, um das Weiterleiten des Verkehrs, der zu der ersten QoS-Richtlinie passt, fortzusetzen.

15. System zum Weiterleiten von Verkehr in einem Trägernetz, wobei das System Folgendes umfasst:
einen Gesprächsagenten, CA, in Bezug auf ein Dienstgespräch, einen Trägernetz-Betriebsmittelmanager, der durch den CA gemanagt wird, und eine Edge-Vorrichtung in einem Versorgungsbereich, der durch den Trägernetz-Betriebsmittelmanager, der durch den CA gemanagt wird, gemanagt wird; **dadurch gekennzeichnet, dass**:
der CA dafür konfiguriert ist, den Trägernetz-Betriebsmittelmanager, der durch den CA gemanagt wird, anzuweisen, eine erste Dienstgüte-Richtlinie, QoS-Richtlinie, zuzuordnen und Betriebsmittel für das Dienstgespräch zu reservieren, zu bestimmen, ob der Trägernetz-Betriebsmittelmanager, der durch irgendeinen anderen CA in Bezug auf das Dienstgespräch gemanagt wird, erfolgreich eine zweite QoS-Richtlinie zuordnet und Betriebsmittel reserviert;
der Trägernetz-Betriebsmittelmanager, der durch den CA gemanagt wird, zum Ausgeben der ersten QoS-Richtlinie an die Edge-Vorrichtung in dem Versorgungsbereich konfiguriert ist, falls der Trägernetz-Betriebsmittelmanager, der durch irgendeinen anderen CA in Bezug auf das Dienstgespräch gemanagt wird, erfolgreich die zweite QoS-Richtlinie zuordnet und das Betriebsmittel für das Dienstgespräch reserviert; und
die Edge-Vorrichtung zum Weiterleiten von Verkehr, der zu der ersten QoS-Richtlinie passt, konfiguriert ist.

16. System nach Anspruch 15, wobei der Trägernetz-Betriebsmittelmanager, der durch irgendeinen anderen CA in Bezug auf das Dienstgespräch gemanagt wird, eine Betriebsmittelreservierungs-Erfolgsnachricht sendet, nachdem er die zweite QoS-Richtlinie zugewiesen hat und die Betriebsmittel für das Dienstgespräch reserviert hat; der CA bestimmt, dass der Trägernetz-Betriebsmittelmanager, der durch irgendeinen anderen CA in Bezug auf das Dienstgespräch gemanagt wird, die zweite QoS-Richtlinie zuordnet und die Betriebsmittel für das Dienstgespräch reserviert, nachdem er die durch irgendeinen anderen CA gesendete Betriebsmittelreservierungs-Erfolgsnachricht empfangen hat.

17. System nach Anspruch 15, das ferner Folgendes umfasst:
einen torgesteuerten Schalter, der dafür konfiguriert ist, die Edge-Vorrichtung zu managen, ob der Verkehr, der zu der ersten QoS-Richtlinie passt, weitergeleitet werden soll; wobei
die Edge-Vorrichtung den torgesteuerten Schalter ausschaltet, wenn sie Verkehrszustandsinformationen empfängt, die eine Anweisung enthalten, die das Weiterleiten des Verkehrs, der zu der ersten QoS-Richtlinie passt, verbietet, um das Weiterleiten des Verkehrs, der zu der ersten QoS-Richtlinie passt, anzuhalten;
die Edge-Vorrichtung den torgesteuerten Schalter einschaltet, wenn sie Verkehrszustandsinformationen empfängt, die eine Anweisung enthalten, die das Weiterleiten des Verkehrs, der zu der ersten QoS-Richtlinie passt, zulässt, um das Weiterleiten des Verkehrs, der zu der ersten QoS-Richtlinie passt, fortzusetzen.

18. System zum Weiterleiten von Verkehr in einem Trägernetz, wobei das System Folgendes umfasst:
einen Gesprächsagenten, CA, in Bezug auf ein Dienstgespräch, einen Trägernetz-Betriebsmittelmanager, der durch den CA gemanagt wird, und eine Edge-Vorrichtung in einem Versorgungsbereich, der durch den Trägernetz-Betriebsmittelmanager, der durch den CA gemanagt wird, gemanagt wird; **dadurch gekennzeichnet, dass**:
der CA zum Anweisen, dass der Trägernetz-Betriebsmittelmanager, der durch den CA gemanagt wird, eine erste Dienstgüte-Richtlinie, QoS-Richtlinie, zuordnet und Betriebsmittel für das Dienstgespräch reserviert, und zum Bestimmen, ob ein Trägernetz-Betriebsmittelmanager, der durch irgendeinen anderen CA in Bezug auf das Dienstgespräch gemanagt wird, erfolgreich eine zweite QoS-Richtlinie zuordnet und
Betriebsmittel für das Dienstgespräch reserviert, konfiguriert ist;
der Trägernetz-Betriebsmittelmanager, der durch den CA gemanagt wird, zum Ausgeben der ersten QoS-Richtlinie und einer Anweisung, die das Weiterleiten von Verkehr, der zu der ersten QoS-Richtlinie passt, an die Edge-Vorrichtung in dem Versorgungsbereich verbietet, konfiguriert ist; und
die Edge-Vorrichtung zum Weiterleiten des Verkehrs, der zu der ersten QoS-Richtlinie passt, falls der CA bestimmt, dass der Trägernetz-Betriebsmittelmanager, der durch irgendeinen anderen CA in Bezug auf das Dienstgespräch gemanagt wird, erfolgreich die zweite QoS-Richtlinie zuordnet und die Betriebsmittel für das Dienstgespräch reserviert,
konfiguriert ist.

19. System nach Anspruch 18, wobei der Trägernetz-Betriebsmittelmanager, der durch irgendeinen anderen CA in Bezug auf das Dienstgespräch gemanagt wird, eine Betriebsmittelreservierungs-Erfolgsnachricht sendet, nachdem er die zweite QoS-Richtlinie zugewiesen hat und die Betriebsmittel für das Dienstgespräch reserviert hat; der CA bestimmt, dass der Trägernetz-Betriebsmittelmanager, der durch irgendeinen anderen CA in Bezug auf das Dienstgespräch gemanagt wird, die zweite QoS-Richtlinie zuordnet und die Betriebsmittel für das Dienstgespräch reserviert, nachdem er die durch irgendeinen anderen CA gesendete Betriebsmittelreservierungs-Erfolgsnachricht empfangen hat.

20. System nach Anspruch 18, das ferner Folgendes umfasst:
einen torgesteuerten Schalter, der dafür konfiguriert ist, die Edge-Vorrichtung dafür zu managen, ob sie den Verkehr, der zu der ersten QoS-Richtlinie passt, weiterleitet; wobei die Edge-Vorrichtung den torgesteuerten Schalter ausschaltet, wenn sie Verkehrszustandsinformationen empfängt, die eine Anweisung enthalten, die das Weiterleiten des Verkehrs, der zu der ersten QoS-Richtlinie passt, verbietet, um das Weiterleiten des Verkehrs, der zu der ersten QoS-Richtlinie passt, anzuhalten;
die Edge-Vorrichtung den torgesteuerten Schalter einschaltet, wenn sie Verkehrszustandsinformationen empfängt, die eine Anweisung enthalten, die das Weiterleiten des Verkehrs, der zu der ersten QoS-Richtlinie passt, zulässt, um das Weiterleiten des Verkehrs, der zu der ersten QoS-Richtlinie passt, fortzusetzen.

## Revendications

1. Procédé d'acheminement de trafic dans un réseau de support, comprenant :
l'instruction (201), par un Agent d'Appel, CA, lié à un appel de service, à un gestionnaire de ressources de réseau de support géré par le CA, d'attribuer une première stratégie de Qualité de Service, QoS, et de réserver des ressources pour l'appel de service ; **caractérisé par** :
la détermination (202), par le CA, qu'un gestionnaire de ressources de réseau de support géré par n'importe quel autre CA lié à l'appel de service attribue ou non correctement une seconde stratégie de QoS et réserve ou non correctement des ressources pour l'appel de service ;
la délivrance (204), par le gestionnaire de ressources de réseau de support géré par le CA, de la première stratégie de QoS à un dispositif limitrophe dans un domaine de gestion si le gestionnaire de ressources de réseau de support géré par n'importe quel autre CA lié à l'appel de service attribue correctement la seconde stratégie de QoS, et réserve correctement les ressources de l'appel de service, le domaine de gestion étant géré par le gestionnaire de ressources de réseau de support géré par le CA ; et
l'acheminement (205), par le dispositif limitrophe, du trafic en fonction de la première stratégie de QoS.

2. Procédé selon la revendication 1, dans lequel la détermination, par le CA, que le gestionnaire de ressources de réseau de support géré par n'importe quel autre CA lié à l'appel de service attribue ou non la seconde stratégie de QoS et réserve ou non les ressources comprend :
la détermination, par le CA, que le gestionnaire de ressources de réseau de support géré par n'importe quel autre CA lié à l'appel de service attribue la seconde stratégie de QoS et réserve les ressources si le CA reçoit un message de réussite de réservation de ressources depuis n'importe quel autre CA lié à l'appel de service, le message de réussite de réservation de ressources étant envoyé par n'importe quel autre CA lié à l'appel de service après que le gestionnaire de ressources de réseau de support géré par n'importe quel autre CA lié à l'appel de service attribue la seconde stratégie de QoS et réserve les ressources.

3. Procédé selon la revendication 1, comprenant en outre :
la délivrance par le gestionnaire de ressources de réseau de support géré par le CA, au dispositif limitrophe d'une instruction interdisant l'acheminement du trafic en fonction de la première stratégie de QoS durant l'acheminement par le dispositif limitrophe du trafic en fonction de la première stratégie de QoS ;
l'arrêt, par le dispositif limitrophe, de l'acheminement du trafic en fonction de la première stratégie de QoS après la réception de l'instruction interdisant l'acheminement du trafic en fonction de la première stratégie de QOS ; et
la continuation, par le dispositif limitrophe, de l'acheminement du trafic en fonction de la première stratégie de QoS après la réception d'une instruction autorisant l'acheminement du trafic en fonction de la première stratégie de QOS depuis le gestionnaire de ressources de réseau de support géré par le CA.

4. Procédé selon la revendication 3, dans lequel l'instruction interdisant l'acheminement du trafic en fonction de la première stratégie de QoS et l'instruction autorisant l'acheminement du trafic en fonction de la première stratégie de QoS sont délivrées au dispositif limitrophe par le biais d'informations d'état de trafic.

5. Procédé selon la revendication 3, dans lequel l'arrêt de l'acheminement du trafic en fonction de la première stratégie de QoS comprend :
l'arrêt, par le dispositif limitrophe, d'un commutateur commandé pour gérer le dispositif limitrophe afin d'acheminer ou non le trafic en fonction de la première stratégie de QoS à la réception d'informations d'état de trafic contenant une instruction interdisant l'acheminement du trafic en fonction de la première stratégie de QoS afin d'arrêter l'acheminement du trafic en fonction de la première stratégie de QoS ;
la continuation de l'acheminement du trafic en fonction de la première stratégie de QoS comprend :
l'activation, par le dispositif limitrophe, du commutateur commandé à la réception d'informations d'état de trafic contenant une instruction autorisant l'acheminement du trafic en fonction de la première stratégie de QoS afin de continuer l'acheminement du trafic en fonction de la première stratégie de QoS.

6. Procédé selon la revendication 1, dans lequel la première stratégie de QoS est adaptée au trafic par des informations de 5 tuples.

7. Procédé selon la revendication 1, 3 ou 6, dans lequel le dispositif limitrophe est un Routeur Limitrophe, (ER).

8. Procédé selon la revendication 1, dans lequel au moins un CA est lié à l'appel de service.

9. Procédé d'acheminement de trafic dans un réseau de support, comprenant :
l'instruction (301), par un Agent d'Appel, CA, lié à un appel de service, à un gestionnaire de ressources de réseau de support géré par le CA, d'attribuer une première stratégie de Qualité de Service, QoS, et de réserver des ressources pour l'appel de service, **caractérisé en ce que** le procédé comprend :
la délivrance (302), par le gestionnaire de ressources de réseau de support géré par le CA, de la première stratégie de QoS et d'une instruction interdisant l'acheminement du trafic en fonction de la première stratégie de QoS à un dispositif limitrophe dans un domaine de gestion, le domaine de gestion étant géré par le gestionnaire de ressources de réseau de support géré par le CA ;
la détermination (303), par le CA, qu'un gestionnaire de ressources de réseau de support géré par n'importe quel autre CA lié à l'appel de service attribue ou non correctement une seconde stratégie de QoS et réserve ou non correctement des ressources pour l'appel de service ;
l'acheminement (306), par le dispositif limitrophe, du trafic en fonction de la première stratégie de QoS si le gestionnaire de ressources de réseau de support géré par n'importe quel autre CA lié à l'appel de service attribue correctement la seconde stratégie de QoS et réserve correctement les ressources pour l'appel de service.

10. Procédé selon la revendication 9, dans lequel, l'acheminement, par le dispositif limitrophe, du trafic en fonction de la première stratégie de QoS comprend :
la réception (305), par le dispositif limitrophe, d'une instruction autorisant l'acheminement du trafic en fonction de la première stratégie de QoS depuis le gestionnaire de ressources de réseau de support géré par le CA, l'instruction autorisant l'acheminement du trafic en fonction de la première stratégie de QoS étant délivrée par le gestionnaire de ressources de réseau de support géré par le CA après que le gestionnaire de ressources de réseau de support géré par n'importe quel autre CA lié à l'appel de service attribue la seconde stratégie de QoS et réserve les ressources pour l'appel de service ;
l'acheminement (306), par le dispositif limitrophe, du trafic en fonction de la première stratégie de QoS après la réception de l'instruction autorisant l'acheminement du trafic en fonction de la première stratégie de QoS.

11. Procédé selon la revendication 9, dans lequel la détermination que le gestionnaire de ressources de réseau de support géré par n'importe quel autre CA, lié à l'appel de service attribue ou non la seconde stratégie de QoS et réserve ou non les ressources comprend :
la détermination, par le CA, que le gestionnaire de ressources de réseau de support géré par n'importe quel autre CA lié à l'appel de service attribue la seconde stratégie de QoS et réserve les ressources si le CA reçoit un message de réussite de réservation de ressources depuis n'importe quel autre CA lié à l'appel de service, le message de réussite de réservation de ressources étant envoyé par n'importe quel autre CA lié à l'appel de service après que le gestionnaire de ressources de réseau de support géré par n'importe quel autre CA lié à l'appel de service attribue la seconde stratégie de QoS et réserve les ressources.

12. Procédé selon la revendication 9, comprenant en outre :
la délivrance, par le gestionnaire de ressources de réseau de support géré par le CA, au dispositif limitrophe d'une instruction interdisant l'acheminement du trafic en fonction de la première stratégie de QoS durant l'acheminement par le dispositif limitrophe du trafic en fonction de la première stratégie de QoS ;
l'arrêt, par le dispositif limitrophe, de l'acheminement du trafic en fonction de la première stratégie de QoS après la réception de l'instruction interdisant l'acheminement du trafic en fonction de la première stratégie de QOS ; et
la continuation, par le dispositif limitrophe, de l'acheminement du trafic en fonction de la première stratégie de QoS après la réception d'une instruction autorisant l'acheminement du trafic en fonction de la première stratégie de QOS depuis le gestionnaire de ressources de réseau de support géré par le CA.

13. Procédé selon la revendication 9, dans lequel l'instruction interdisant l'acheminement du trafic en fonction de la première stratégie de QoS et l'instruction autorisant l'acheminement du trafic en fonction de la première stratégie de QoS sont délivrées au dispositif limitrophe par le biais d'informations d'état de trafic.

14. Procédé selon la revendication 12, dans lequel l'arrêt de l'acheminement du trafic en fonction de la première stratégie de QoS comprend :
l'arrêt, par le dispositif limitrophe, d'un commutateur commandé pour gérer le dispositif limitrophe afin d'acheminer ou non le trafic en fonction de la première stratégie de QoS à la réception d'informations d'état de trafic contenant une instruction interdisant l'acheminement du trafic en fonction de la première stratégie de QoS afin d'arrêter l'acheminement du trafic en fonction de la première stratégie de QoS ;
la continuation de l'acheminement du trafic en fonction de la première stratégie de QoS comprend :
l'activation, par le dispositif limitrophe, du commutateur commandé à la réception d'informations d'état de trafic contenant une instruction autorisant l'acheminement du trafic en fonction de la première stratégie de QoS afin de continuer l'acheminement du trafic en fonction de la première stratégie de QoS.

15. Système d'acheminement de trafic dans un réseau de support, comprenant :
un Agent d'Appel, CA, lié à un appel de service, un gestionnaire de ressources de réseau de support géré par le CA et un dispositif limitrophe dans un domaine de gestion géré par le gestionnaire de ressources de réseau de support géré par le CA ; **caractérisé en ce que** :
le CA est configuré pour instruire le gestionnaire de ressources de réseau de support géré par le CA d'attribuer une première stratégie de Qualité de Service, QoS, et de réserver des ressources pour l'appel de service, déterminer qu'un gestionnaire de ressources de réseau de support géré par n'importe quel autre CA lié à l'appel de service attribue ou non correctement une seconde stratégie de QoS et réserve ou non correctement des ressources ;
le gestionnaire de ressources de réseau de support géré par le CA est configuré pour délivrer la première stratégie de QoS au dispositif limitrophe dans le domaine de gestion si le gestionnaire de ressources de réseau de support géré par n'importe quel autre CA lié à l'appel de service attribue correctement la seconde stratégie de QoS et réserve correctement les ressources pour l'appel de service ; et
le dispositif limitrophe est configuré pour acheminer le trafic en fonction de la première stratégie de QoS.

16. Système selon la revendication 15, dans lequel le gestionnaire de ressources de réseau de support géré par n'importe quel autre CA lié à l'appel de service envoie un message de réussite de réservation de ressources après l'attribution de la seconde stratégie de QoS et la réservation des ressources pour l'appel de service ;
le CA détermine que le gestionnaire de ressources de réseau de support géré par n'importe quel autre CA lié à l'appel de service attribue la seconde stratégie de QoS et réserve les ressources pour l'appel de service après la réception du message de réussite de réservation de ressources envoyé par n'importe quel autre CA.

17. Système selon la revendication 15, comprenant en outre :
un commutateur commandé, configuré pour gérer le dispositif limitrophe afin d'acheminer ou non le trafic en fonction de la première stratégie de QoS ; dans lequel le dispositif limitrophe désactive le commutateur commandé à la réception d'informations d'état de trafic contenant une instruction interdisant l'acheminement du trafic en fonction de la première stratégie de QoS afin d'arrêter l'acheminement du trafic en fonction de la première stratégie de QoS ;
le dispositif limitrophe active le commutateur commandé à la réception d'informations d'état de trafic contenant une instruction autorisant l'acheminement du trafic en fonction de la première stratégie de QoS afin de continuer l'acheminement du trafic en fonction de la première stratégie de QoS.

18. Système d'acheminement de trafic dans un réseau de support, comprenant :
un Agent d'Appel, CA, lié à un appel de service, un gestionnaire de ressources de réseau de support géré par le CA et un dispositif limitrophe dans un domaine de gestion géré par le gestionnaire de ressources de réseau de support géré par le CA ; **caractérisé en ce que** :
le CA est configuré pour instruire le gestionnaire de ressources de réseau de support géré le CA d'attribuer une première stratégie de Qualité de Service, QoS, et de réserver des ressources pour l'appel de service, et déterminer qu'un gestionnaire de ressources de réseau de support géré par n'importe quel autre CA lié à l'appel de service attribue ou non correctement une seconde stratégie de QoS et réserve ou non correctement des ressources pour l'appel de service ;
le gestionnaire de ressources de réseau de support géré par le CA est configuré pour délivrer la première stratégie de QoS et une instruction interdisant l'acheminement du trafic en fonction de la première stratégie de QoS au dispositif limitrophe dans le domaine de gestion : et
le dispositif limitrophe est configuré pour acheminer le trafic en fonction de la première stratégie de QoS si le CA détermine que le gestionnaire de ressources de réseau de support géré par n'importe quel autre CA lié à l'appel de service attribue correctement la seconde stratégie de QoS et réserve correctement les ressources pour l'appel de service.

19. Système selon la revendication 18, dans lequel le gestionnaire de ressources de réseau de support géré par n'importe quel autre CA lié à l'appel de service envoie un message de réussite de réservation de ressources après l'attribution de la seconde stratégie de QoS et la réservation des ressources pour l'appel de service ;
le CA détermine que le gestionnaire de ressources de réseau de support géré par n'importe quel autre CA lié à l'appel de service attribue la seconde stratégie de QoS et réserve les ressources pour l'appel de service après la réception du message de réussite de réservation de ressources envoyé par n'importe quel autre CA.

20. Système selon la revendication 18, comprenant en outre :
un commutateur commandé, configuré pour gérer le dispositif limitrophe afin d'acheminer ou non le trafic en fonction de la première stratégie de QoS ; dans lequel le dispositif limitrophe désactive le commutateur commandé à la réception d'informations d'état de trafic contenant une instruction interdisant l'acheminement du trafic en fonction de la première stratégie de QoS afin d'arrêter l'acheminement du trafic en fonction de la première stratégie de QoS ;
le dispositif limitrophe active le commutateur commandé à la réception d'informations d'état de trafic contenant une instruction autorisant l'acheminement du trafic en fonction de la première stratégie de QoS afin de continuer l'acheminement du trafic en fonction de la première stratégie de QoS.
